Europäisches Patentamt

European Patent Office

Office européen des brevets

(19)

(11) Numéro de publication : **0 344 265 B1**

# (12) FASCICULE DE BREVET EUROPEEN

(45) Date de publication du fascicule du brevet :
**10.03.93 Bulletin 93/10**

(51) Int. Cl.$^5$ : **D21H 11/04,** D21H 17/02, D21H 17/24

(21) Numéro de dépôt : **89900276.0**

(22) Date de dépôt : **14.12.88**

(86) Numéro de dépôt international :
**PCT/FR88/00610**

(87) Numéro de publication internationale :
**WO 89/05884 29.06.89 Gazette 89/14**

(54) **MATERIAU DE DENSITE DIMINUEE CONTENANT UNE CHARGE VEGETALE.**

(30) Priorité : **14.12.87 FR 8717400**

(43) Date de publication de la demande :
**06.12.89 Bulletin 89/49**

(45) Mention de la délivrance du brevet :
**10.03.93 Bulletin 93/10**

(84) Etats contractants désignés :
**AT BE CH DE FR GB IT LI LU NL SE**

(56) Documents cités :
**EP-A- 0 050 316
DE-C- 415 675
FR-A- 2 612 828
GB-A- 5 560 025
SU-A- 571 538
US-A- 3 184 373**

(56) Documents cités :
**US-A- 4 011 130
ABIPC, vol. 48, no.8, February 1978, p. 938,
abstract no. 8739
ABIPC, vol. 58, no.2, August 1987, C. Vasiliu-
Opera et al.:"Optimization of the micronization process of some fibrous materials with
different end-uses", p. 184, abstract 1523**

(73) Titulaire : **GOMEZ, Daniel
8, allée du Pont-Rouge
F-40200 Mimizan (FR)**

(72) Inventeur : **GOMEZ, Daniel
8, allée du Pont-Rouge
F-40200 Mimizan (FR)**

(74) Mandataire : **Clisci, Serge et al
S.A. FEDIT-LORIOT CONSEILS EN
PROPRIETE INDUSTRIELLE 38, avenue Hoche
F-75008 Paris (FR)**

EP 0 344 265 B1

## Description

DOMAINE DE L'INVENTION

La présente invention a trait à l'utilisation d'une charge végétale de faible densité et de granulométrie contrôlée, Elle concerne plus particulièrement l'obtention d'un matériau composite en feuille contenant des fibres qui est plus poreux et a une densité diminuée avec une main améliorée grâce à une telle charge végétale. Elle est particulièrement intéressante dans le domaine de la fabrication des feuilles fibreuses telles que papiers, cartons et autres non-tissés.

Ainsi, la présent invention concerne, suivant l'un de ses aspects, la fabrication d'un matériau en feuille par voie papetière renfermant une charge végétale de faible densité et de granulométrie contrôlée pour permettre la diminution de la densité, l'augmentation de l'épaisseur, de la main et de la porosité de ce matériau.

Par ailleurs selon l'invention, la diminution de la densité et l'augmentation de l'épaisseur du matériau confèrent, notamment pour les feuilles fibreuses, des propriétés spécifiques et bénéfiques comme l'opacité, l'isolation acoustique, thermique et électrique.

De plus, selon l'invention, l'utilisation de la charge végétale sus-visée est favorable à la vitesse d'égouttage au cours de la fabrication du matériau en feuille, donc à la productivité. Le présent procédé offre également l'avantage de réduire les coûts de revient.

ENVIRONNEMENT TECHNOLOGIQUE DE L'INVENTION

L'utilisation de charges ou pigments ou pigments minéraux, organiques, synthétiques est classique en papeterie, Les charges et pigments minéraux les plus couramment utilisés sont le talc, le kaolin, le carbonate de calcium naturel et précipité ou provenant des opérations de régénération des liqueurs noires extraites de la cuisson des pâtes kraft, le carbonate de magnésium, les hydrates d'alumine, le sulfate de calcium, la silice colloïdale, le sulfate de baryum, le dioxyde de titane, l'hydroxyde de magnésium, et leurs mélanges.

Les charges usuelles de la papeterie ont des diamètres sphériques équivalents, mesurés au moyen du dispositif SEDIGRAPH, variables mais en règle générale toutes ces charges ont des particules de dimensions inférieures à 100 micromètres, en particulier inférieures à 50 micromètres et notamment inférieures à 30 micromètres.

Ainsi, le kaolin à incorporer dans la masse a 50 % de particules de granulométrie comprise entre 6 et 8 micromètres ($d_{50}$ = 6-8 micromètres) et 95 % de particules de granulométrie inférieure à 50 micromètres ($d_{95}$ < 50 micromètres), Le talc de masse a un $d_{50}$ compris entre 8 et 10 micromètres et un $d_{95}$ inférieur à 50 micromètres, et, le carbonate de calcium un $d_{50}$ compris entre 7 et 9 micromètres et un $d_{95}$ inférieur à 25 micromètres.

Les pigments de couchage quant à eux ont un $d_{50}$ compris entre 1 et 3 micromètres et un $d_{95}$ inférieur à 10 micromètres. Les pigments organiques sont beaucoup plus fins et ont un $d_{50}$ compris entre 0,1 et 1 micromètre.

On sait, notamment de EP-B-O 006 390, de EP-B-O 050 316 et de FR-A-2 578 870, que les charges minérales favorisent la réduction du coût matière et selon leur nature, l'opacité surtout dans le domaine des supports d'impression-écriture et de certains papiers spéciaux. Si la teneur en charges minérales dans le matériau est élevée comparativement à celle des fibres cellulosiques, elles peuvent favoriser l'inertie, la stabilité dimensionnelle et c'est notamment le but recherché dans les supports de base pour revêtement de sols ou muraux; mais l'emploi de ces charges minérales a un effet néfaste sur l'épaisseur du matériau, d'une part, et l'augmentation du taux de cendres restantes se traduit aussi par une augmentation sensible de la densité du matériau qui ne joue pas en faveur du coût au m2, d'autre part.

L'industrie papetière utilise certaines charges ou pigments spéciaux afin d'augmenter l'épaisseur de la feuille, par exemple : la diatomite ou les terres diatomées naturelles, calcinées ou activées, les microsphères de carbone ou de verre, les silicates de calcium et les silices colloïdales, mais ces charges ou pigments sont généralement très chers.

L'incorporation de pâtes cellulosiques dites mécaniques comme les pâtes thermomécaniques ou chimico-mécaniques et, à un degré moindre, les pâtes mercerisées, les fibres synthétiques, notamment de polyester, de polyéthylène et de polypropylène, joue aussi sur l'amélioration du bouffant mais l'utilisation de ces fibres exige des moyens industriels importants et ne concerne que des applications bien spécifiques.

La présente invention préconise une nouvelle solution technique pour pallier les difficultés précitées. Cette solution fait appel à une matière première végétale, abondante et renouvelable, à savoir le bois et principalement les déchets de bois, ainsi qui d'autres déchets végétaux tels qui notamment les déchets de la production de céréales, en particulier les rafles de maïs. C'est à partir de cette matière première végétale que seront fabriquées les charges végétales de faible densité à la granulométrie souhaitée afin qu'elles puissent être incor-

2

porées dans la masse, soit directement comme une quelconque autre charge classique de la papèterie, soit préférentiellement sous la forme d'un mélange préalablement floculé de charge et de liant.

ART ANTERIEUR

On sait que l'on a déjà signalé dans le passé la possibilité d'utiliser de la poudre ou farine de bois en tant que charge introduite dans la masse ou déposée en surface par couchage lors de la fabrication de papiers et cartons.

On sait notamment que le résumé No 8739 de la revue ABSTRACT BULLETIN OF THE INSTITUTE OF PAPER CHEMISTRY, 48, (No 8), page 938, (février 1978) [qui a trait au brevet russe SU-A-571 538], le brevet US-A-3 184 373 et le brevet allemand DE-C-415 675 prévoient l'incorporation de poudre de bois dans la masse fibreuse.

Le résumé No 8739 précité préconise, pour la fabrication de panneaux électriquement isolants, l'utilisation d'un mélange de 70-95 % en poids de pâte cellulosique (fibres kraft) et de 30-5 % en poids de farine de bois, ces panneaux étant signalés comme étant plus absorbants vis-a-vis des huiles et plus résistants aux décharges superficielles. Ce document ne décrit ni ne suggère l'utilisation d'une charge végétale ayant la granulométrie spécifique de la présente invention. En particulier, le brevet SU-A-571 538 qui fait l'objet dudit résumé No 8739 indique (voir colonne 2, lignes 17-18) que la dimension des particules de la sciure ou farine de bois ne doit pas dépasser 200 millimicromètres.

Le brevet US-A-3 184 373 concerne l'amélioration de la rétention de charges dans les papiers et cartons au moyen d'un agent de rétention tel que la polyéthylèneimine, les résines mélamine-formaldéhyde et les résines urée-formaldéhyde, lesdites "charges" étant définies (voir colonne 2, lignes 3-34 ) comme étant des substances solides ou liquides et comprenant notamment les charges minérales papetières proprement dites, les poudres métalliques, les poudres de résines thermodurcissables, les résines thermoplastiques, les liants, les floculants et la poudre de bois (voir colonne 2, ligne 27). La granulométrie desdites "charges" est signalée comme étant comprise entre environ 250 $\mu m$ (60 mesh) et environ 7 $\mu m$ (2 000 mesh) (voir colonne 1, lignes 70-71). Toutefois, le document US-A-3 184 373 ne donne aucun exemple illustrant l'utilisation de ladite poudre de bois introduite dans la masse; de plus il ne décrit ni ne suggère la granulométrie spécifique de la charge végétale selon l'invention.

Le document DE-C-415 675 propose un procédé d'encollage selon lequel on incorpore à une suspension aqueuse de fibres (i) une dispersion collo0ïdale d'une substance submicronique (c'est-a-dire d'une granulométrie inférieure a 1 micromètre) contenant de la cellulose et provenant du broyage de bois ou de paille, puis (ii) un floculant. Ladite substance submicronique, qui présente donc une granulométrie nettement inférieure a celle de la charge végétale selon l'invention, remplit un rôle totalement différent de celui de ladite charge végétale ; en effet ladite substance submicronique est présentée dans DE-C-415 675 comme diminuant la porosité du papier résultant en obturant et/ou remplissant les pores de la nappe fibreuse, alors que selon l'invention on recherche l'augmentation de la porosité.

On connaît par ailleurs des techniques de revêtement (sur support non fibreux) ou de surfaçage (sur support fibreux en feuille tel que les papiers et cartons), notamment du brevet belge BE-A-425 432, de la demande internationale PCT publiée WO 86/05195 et du brevet britannique GB-A-1 464 381, selon lesquelles on enduit un support avec une composition contenant de la poudre de bois. Il se trouve que ces techniques ne décrivent ni ne suggèrent l'incorporation dans la masse fibreuse de la charge végétale de granulométrie spécifique suivant l'invention.

On connaît en outre, notamment du résumé No 1523 de la revue ABSTRACT BULLETIN OF THE INSTITUTE OF PAPER CHEMISTRY, 58 (No 2), page 184 (août 1987), du résumé No 7191, ibidem 55 (No 6), page 754, (décembre 1984), et de la demande de brevet publiée FR-A-2 612 828 (qui a été rendue publique le 30.09.1988 postérieurement a la date de priorité de la présente invention) des produits susceptibles d'être incorporés dans les papiers et cartons, contenant de la cellulose et obtenus par traitement physico-chimique de copeaux de bois ou de fibres cellulosiques. Lesdits produits contenant de la cellulose ont une composition différente de celle de la source végétale ou fibreuse dont ils dérivent. En effet les traitements physiques et chimiques auxquels a été soumise ladite source ne conservent pas l'intégrité des composants de ladite source.

Plus précisément, le résumé No 1523 précité décrit l'obtention de cellulose sous forme de particules micronisées (ayant une granulométrie comprise entre 5 et 75 micromètres et un degré de cristallinité supérieur à 65 %) par un traitement hydrolytique de pâtes cellulosiques. La cellulose ainsi obtenue est différente de la composition de la charge végétale selon l'invention eu égard à la nature des composants de cette dernière.

Le résumé No 7191 précité décrit l'utilisation de cellulose microfibrillée pour la réalisation d'enduits de revêtement. Là encore les microfibrilles de cellulose sont différentes par leur structure et leur composition de la charge végétale selon l'invention.

EP 0 344 265 B1

Le document FR-A-2 612 828 est déceptif en ce sens que sa revendication 1, telle que publiée, fait état de l'utilisation de particules de bois dans la préparation de feuilles fibreuses, alors qu'il s'agit en fait de l'utilisation d'un extrait, sous forme pulvérulente, obtenu par traitement de poudre de bois, ledit traitement comprenant (voir description de ce document de la page 1, ligne 28, à la page 2, ligne 12) notamment (i) l'imprégnation de la poudre de bois avec un agent chimique (sic) liquide approprié, (ii) l'autolyse éclair (ou l'autohydrolyse éclair) de la poudre de bois ainsi imprégnée sous une pression supérieure ou égale à 30 bars à une température supérieure ou égale à 230°C pendant au moins 90 secondes, puis une détente rapide (brutale), (iii) le lavage du produit résultant avec l'eau ou un mélange eau-dioxanne afin d'éliminer les hémicelluloses et la majeure partie de la lignine, des acides gras et des acides résiniques, puis (iv) le séchage du produit pulvérulent ainsi extrait contenant des matières insolubles dans l'eau et dépourvu de matières hydrosolubles.

La présente invention se différencie de l'enseignement desdits résumés No 1523 et No 7191 et dudit document FR-A-2 612 828 par le fait que la charge végétale, dont on préconise l'utilisation dans la masse, a conservé substantiellement la totalité des composants de la source végétale; dans la charge végétale selon l'invention seules la teneur en eau et la teneur en substances volatiles (telle que les essences de bas point d'ébullition) ont pu être affectées par rapport a la source végétale de départ. Ainsi si la source végétale est le bois on va retrouver dans la charge végétale pratiquenent tous les composants du bois tels que décrits dans l'ouvrage de FENGEL et al., WOOD CHEMISTRY ULTRASTRUCTURE REACTIONS, pages 26-33, éditeur D. GRUYTER (1984), incorporé ici a titre de référence.

Par rapport a l'enseignenent de l'art antérieur le plus proche, qui est constitué par le brevet russe SU-A-571 538 et son résumé No 8739 publié dans la revue ABSTRACT BULLETIN OF THE INSTITUTE OF PAPER CHEMISTRY, 48, (No 8), page 938, (février 1978), le brevet américain US-A-3 184 373 et le brevet allemand DE-C-415 675 précités, il convient de remarquer que l'utilisation de farine ou poudre de bois n'a jamais été réalisée à l'échelle industrielle (i) selon les spécifications précises pour la granulométrie et l'humidité relative de la charge végétale, et (ii) en vue de l'obtention par voie papetière de feuilles de matériaux fibreux plus économiques et de densité plus faible avec une porosité et une main élevées.

BUTS DE L'INVENTION

Suivant l'invention, on préconise l'utilisation d'une charge végétale de granulométrie spécifique pour la fabrication par voie papetière de matériaux fibreux en feuille, en faisant appel a une solution technique différente de l'enseignement de l'art antérieur par le choix de ladite charge végétale de granulométrie spécifique.

Dans cette solution technique la charge végétale de de granulométrie spécifique est introduite dans la masse.

En variante, on préconise le remplacement d'une partie des fibres (chères) du matériau fibreux en feuille par ladite charge végétale de granulométrie spécifique (moins coûteuse).

Selon l'invention on propose une nouvelle solution technique permettant de diminuer la densité, d'augmenter la porosité, d'augmenter la main et de diminuer les coûts de fabrication de papiers et cartons.

Cette nouvelle solution technique permet également (i) d'augmenter l'épaisseur du matériau fibreux en feuille eu égard à la diminution de la densité, (ii) d'améliorer le bouffant dudit matériau, et (iii) d'améliorer l'égouttage sur machine à papier lors de la formation dudit matériau.

Une des caractéristiques fondamentales du procédé selon l'invention est l'utilisation d'une charge végétale pulvérulente (ayant une densité inférieure à 500 kg/m³ et de préférence inférieure à 300 kg/m³) qui a un $d_{95}$ inférieur à 150 micromètres et un $d_{80}$ supérieur à 10 micromètres [c'est-à-dire que au moins 95 % des particules de la charge végétale (pourcentage exprimé en poids) traversent un tamis à mailles carrées (notamment en acier inoxydable) d'ouverture de 150 x 150 micromètres, et que plus de 80 % desdites particules ne traversent pas un tamis à mailles carrées (notamment en acier inoxydable) d'ouverture de 10 x 10 micromètres], d'autre part.

Suivant un premier aspect de l'invention on préconise donc un procédé pour la préparation par voie papetière d'un matériau fibreux en feuille, ledit procédé, qui comprend l'introduction d'une charge végétale pulvérulente dans une dispersion aqueuse contenant des fibres, étant caractérisé en ce que ladite charge végétale a une granulométrie telle que (i) au moins 95 % en poids des particules de ladite charge végétale ont des dimensions inférieures à 150 micromètres, et (ii) au moins 80 % en poids des particules de ladite charge végétale ont des dimensions supérieures à 10 micromètres, en ce que ladite charge végétale est obtenue par une opération de broyage-micronisation à partir d'une source végétale ayant une humidité résiduelle inférieure à 20 % et en ce que la charge provient d'une essence telle que la répartition granulométrique et les conditions de broyage micronisation conduisent à une densité de la charge inférieure à 500 kg/m³, de préférence inférieure à 300 kg/m³, ledit procédé permettant d'obtenir, notamment, une diminution de la densité, une augmentation de l'épaisseur et une amélioration de l'égouttage du matériau fibreux en feuille.

4

Suivant un second aspect de l'invention, on préconise ledit procédé mettant en oeuvre l'utilisation de ladite charge végétale un procédé pour augmenter l'épaisseur, la main et la porosité, d'une part, et diminuer la densité, d'autre part, du matériau fibreux en feuille. L'utilisation de ladite charge végétale a un effet très favorable au niveau de l'égouttage, et offre l'avantage de réduire les coûts de production.

## DESCRIPTION DETAILLEE DE L'INVENTION

Pour l'obtention de la charge végétale suivant l'invention, la plupart au moins des essences de bois peuvent être utilisées comme les bois de résineux tels que sapin, pin, épicéa, les bois de feuillus tels que bouleau, hêtre, charme, châtaignier. Ces bois peuvent provenir soit de coupes d'éclaircie, soit de coupes rases en forêt, après mise en copeaux ou en plaquettes selon les méthodes bien connues de l'industrie papetière pour la fabrication des pâtes chimiques et chimico-mécaniques. Pour des raisons essentiellement économiques ces charges végétales proviendront de déchets de l'industrie du sciage et du rabotage, comme les sciures vertes et sèches, les copeaux de rabotage, les écorces, les chutes d'usinage en parqueterie, menuiserie et ébénisterie.

Ladite charge végétale peut également être obtenue a partir de déchets de matière végétale de l'exploitation forestière comme les souches, les branches de petits diamètres inexploitées, les rémanents, les cimes d'arbres, ainsi que de déchets de la récolte de céréales tels que les rafles de ma0îs.

Les diverses sources végétales précitées ayant des propriétés physiques, chimiques et morphologiques différentes, confèrent au matériau fibreux en feuille final des propriétés variables, en ce qui concerne la densité, la main et la porosité, selon les essences utilisées. Dans tous les cas on obtient néanmoins une diminution significative de la densité et une augmentation de la main et de la porosité.

Il est important que la charge végétale micronisée soit sous la forme de particules ayant des dimensions moyennes inférieures a 150 micromètres ($d_{95}$ < 150 micromètres) et supérieures a 10 micromètres ($d_{80}$ > 10 micromètres). En effet, si les particules de la charge végétale micronisée ont des dimensions moyennes égales ou supérieures a 150 micromètres, le produit fibreux en feuille résultant présente des défauts d'uniformité, notamment des défauts d'épair; si les particules de la charge végétale micronisée ont des dimensions moyennes inférieures ou égales a 10 micromètres, le produit fibreux en feuille résultant est nettement moins poreux ainsi que l'enseigne le brevet DE-C-415 675 précité. Comme indiqué plus haut la granulométrie de la charge végétale micronisée sera telle que $d_{95}$ < 150 micromètres (de préférence $d_{95}$ < 100 micromètres) et $d_{80}$ > 10 micromètres.

Par ailleurs, selon ce mode d'obtention a partir de la source végétale, la densité (ou masse volumique) de la charge végétale micronisée est inférieure a 500 kg/m$^3$ et mieux inférieure à 300 kg/m$^3$.

Pour l'obtention de la charge végétale selon l'invention, il est également important que la source végétale, que l'on soumet a une opération de broyage-micronisation, ait une humidité résiduelle inférieure à 20 % avant ladite opération de broyage-micronisation.

De préférence, la source végétale soumise au broyage-micronisation a une granulométrie inférieure ou égale à 5 mm

Suivant le procédé de l'invention les déchets de végétaux sont soumis à une opération de broyage-micronisation afin de produire les charges végétales aux dimensions granulométriques requises pour l'objet de l'invention. Ce résultat est obtenu par une technique de broyage-micronisation, notamment au moyen d'un broyage-sélecteur à disques avec batteurs à impact permettant par des collisions intensives à haute vitesse et avec des changements de pression de provoquer la désagrégation progressive de la source végétale jusqu'à l'obtention de la finesse et de la densité recherchées, De façon avantageuse, l'humidité résiduelle de la source végétale devant être soumise à l'opération de broyage-micronisation sera inférieure ou égale à 15 % .

Ainsi, si la source végétale (ou matière première) se présente sous la forme de plaquettes, copeaux de rabotage, chutes d'usinage, de branches etc..., il est préférable de la déchiqueter au préalable et éventuellement de la sécher, pour l'obtention d'une finesse inférieure ou égale à 5 mm et d'une humidité résiduelle inférieure à 20 %, avant l'opération de broyage-micronisation.

Dans les applications papetières, les charges végétales selon l'invention auront donc un $d_{95}$ inférieur à 150 micromètres (i,e, au moins 95 % des particules de la charge végétale traversent un tamis à mailles carrées de 150 micromètres sur 150 micromètres), de préférence un $d_{95}$ inférieur à 100 micromètres. Ces charges végétales seront associées à un liant organique nature ou usuel, à des fibres et à divers additifs classiques pour la préparation des feuilles fibreuses.

De préférence, le rapport pondéral charge végétale pulvérulente/ fibres selon l'invention se situera généralement dans la gamme allant de 1/100 à 6/1. On utilisera avantageusement pour la fabrication de papiers d'emballage un rapport pondéral charge végétale/fibres dans la gamme de 1/100 à 2/10 (et mieux de 1/100 à 1/10), pour celle de supports d'impression-écriture un rapport pondéral dans la gamme de 2/10 à 5/10 (et mieux de 2,5/10 à 3,5/10), pour celle des cartons un rapport pondéral dans la gamme de 1/10 à 5/10, pour celle de papiers pour imprégnation un rapport pondéral dans la gamme de 1,5/10 à 5/10 (et mieux de 2/10 à 3/10) et pour celle des papiers spéciaux un rapport pondéral dans la gamme de 6/100 à 6/1 (et mieux de 3/10 à 8/10).

Les fibres utilisables pour ces diverses applications sont notamment les fibres organiques naturelles ou synthétiques comme les fibres cellulosiques, les fibres de polyamide, les fibres de polyester, les fibres de polyalkylène, les fibres de polyacrylate, les fibres minérales comme les fibres de verre, les fibres de céramique, les fibres de gypse aciculaire, les fibres de carbone et la laine de roche, les fibres de régénération de la cellulose. Ces fibres peuvent être utilisées seules ou en mélange. Les fibres les plus couramment employées seront les fibres cellulosiques provenant des pâtes chimiques kraft ou bisulfite, des pâtes mécaniques, thermomécaniques ou chimicothermécaniques. Ces pâtes produites à partir des essences de résineux ou de feuillus peuvent être écrues, mi-blanchies ou blanchies.

Il est aussi possible d'utiliser des pâtes cellulosiques dites de récupération provenant de vieux papiers (tels que supports d'impression-écriture, journaux, caisses en carton, papiers d'emballage, magazines et analogues), seules ou en association avec des fibres cellulosiques nobles.

Selon le procédé de l'invention, les charges végétales de granulométrie contrôlée peuvent être associées à d'autres charges minérales organiques ou synthétiques ou leurs mélanges, ces charges ou pigments usuels ou spéciaux de la papeterie sont ceux qui ont déjà été cités ci-dessus.

En pratique, selon l'invention, la charge végétale va remplacer une partie de l'ingrédient essentiel du matériau, à savoir les fibres dans le domaine papetier, d'une part, et va pouvoir remplacer la totalité ou une fraction seulement de la charge usuelle notamment minérale du matériau, d'autre part.

Dans la fabrication du papier, il peut être avantageux d'incorporer dans la masse fibreuse contenant les charges végétales, un ou des agents classiques en papeterie de renforcement des résistances à l'état sec de la feuille comme, par exemple les amidons natifs ou modifiés par voie chimique, enzymatique ou thermique, les dextrines, les alcools polyvinyliques, la caséine, la colle animale, les protéines végétales, les esters cellulosiques comme la carboxyméthylcellulose, les alginates, les dispersions de polyamines synthétiques, les latex styrène-butadiène carboxylés ou non carboxylés, les latex acryliques, les latex styrène-acrylique, les latex d'acétate de vinyle, les latex de néoprène, les latex d'acrylonitrile, les latex de chlorure de vinyle et leurs mélanges.

La quantité de ces polymères organiques naturels ou synthétiques qui jouent un rôle de liant de masse ou de surface peut être très variable selon les applications mais elle est en règle générale comprise entre 0,1 et 10 parties en poids sec de liant pour 100 parties en poids de fibres pour les applications classiques et notamment pour les papiers et cartons d'emballage, les papiers pour impression-écriture, mais elle peut être beaucoup plus élevée et comprise entre 10 et 50 parties en poids et préférentiellement entre 10 et 30 parties en poids sec pour 100 parties en poids de la feuille fibreuse pour des applications spéciales comme les supports de base pour complexage, pour enduction, pour revêtements.

Il peut être aussi nécessaire d'améliorer les résistances à l'état humide des feuilles fibreuses selon l'invention, notamment avec des additifs usuels de la papeterie tels que les résines urée-formol et mélamine-formol, le glyoxal, les polyalkylèneamines notamment cationiques et réticulées, les produits de condensation de mélamine-formaldéhyde et d'acide amino-caproïque.

Outre les fibres, les charges végétales combinées ou non à d'autres charges ou pigments en présence ou non de polymères organiques naturels ou synthétiques pour l'amélioration des propriétés à l'état sec et humide, on peut aussi utiliser :

- des agents de collage de l'industrie papetière pour réduire la sensibilité à l'eau du papier tels que les colophanes modifiées, les émulsions de paraffine, les alkylcétènes dimères;
- des agents de régulation du pH comme le sulfate d'alumine et l'acide sulfurique ;
- des agents de rétention anioniques et/ou cationiques pour réduire les pertes de matières au cours de la formation de la feuille.

On peut citer notamment les résines polyéthylèneimine, polyamide-amine, polyalkylamine notamment réticulées, polyacrylamide notamment modifiées, les ammonium quaternaires.

D'autres additifs usuels en papeterie peuvent aussi être employés :
- les agents anti-mousse ;
- les azurants optiques ;
- les agents de coloration ou de nuançage ;
- les agents fongicides et/ou bactéricides.

Selon un autre aspect de l'invention, ces charges végétales peuvent être préalablement soumises a un traitement chimique pour leur conférer des propriétés d'aspect, des caractéristiques physiques ou chimiques qu'elles n'ont pas a l'état naturel et avant leur introduction dans la masse. Citons a titre d'exemple les traitements ayant une influence sur la modification de la couleur des particules de bois, les traitements fongicides, bactéricides, ignifuges ou ceux favorables a la diminution de la sensibilité a l'eau de la matière végétale.

Une feuille contenant les charges végétales suivant l'invention peut être réalisée sur une machine a papier ou a carton classique avec une ou plusieurs tables plates, inclinées ou verticales équipées ou non de formeurs mono ou double toile et de formes rondes. Cette feuille peut être mono-jet ou multi-jets avec des jets de compositions identiques ou différentes comme cela est notamment le cas pour les cartons.

La feuille fibreuse suivant l'invention renfermant des charges végétales peut être aussi soumise a différents traitements de surface classiques en papeterie, sur ou hors machine a papier et avec les moyens de surfaçage, d'imprégnation, d'enduction et de couchage connus des fabricants et des transformateurs de papiers.

La charge végétale suivant l'invention est utilisable dans la masse et à la surface lors de la fabrication de la feuille fibreuse. Elle est introduite dans la masse, soit directement comme toute autre charge papière classique, d'une part, soit préférentiellement sous la forme d'un mélange de charge végétale et de liant organique préalablement homogénéisé puis floculé (notamment au moyen d'un floculateur étagé ) avant d'être incorporé dans la suspension aqueuse des fibres en amont de la caisse de tête, d'autre part. Elle est, si cela est nécessaire, apportée à la surface de la feuille fibreuse selon des méthodes usuelles de traitement des surfaces des papiers et cartons, notamment par enduction, couchage et/ou imprégnation, selon l'art antérieur précité (notamment BE-A-425 432, WO 86/05 195 et GB-A-1 464 381).

La charge végétale suivant l'invention est directement utilisable dans le domaine de la préparation d'enductions et peintures. Le but essentiel est la diminution de la densité du matériau. Les buts seconds, qui sont également intéressants, sont l'augmentation de l'épaisseur du matériau, l'amélioration du bouffant du matériau et les propriétés bénéfiques en ce qui concerne l'amélioration de l'opacité et de l'isolation acoustique, thermique et électrique.

Pour les applications papetières, le meilleur mode de mise en oeuvre a été donné ci-après.

Stade 1

Les fibres cellulosiques en suspension aqueuse sont raffinées de façon classique à un degré Schoepper-Riegler compris entre 15 et 70, selon les applications à une concentration variable comprise entre 20 et 350 g/l, notamment entre 20 et 60 g/l, à l'aide de raffineurs coniques ou doubles disques standards, ou notamment entre 250 et 350 g/l avec des raffineurs spéciaux pour raffinage dit à haute concentration employé pour la fabrication de supports d'emballage. A ce stade, on peut introduire, si cela est nécessaire d'autres types de fibres synthétiques ou minérales seules ou en association. En particulier, les fibres de verre sont utiles pour améliorer la stabilité dimensionnelle de la feuille. A ce stade, la composition fibreuse peut être unique quand il s'agit de fabriquer une feuille mono-jet, ou variable quand il s'agit de fabriquer une feuille multi-jets comme cela est notamment le cas pour le carton.

Stade 2

Les charges végétales sont produites a partir de déchets végétaux et principalement de déchets de l'industrie du bois et de l'exploitation forestière. Ces déchets seront de préférence soumis à une opération initiale de déchiquetage-broyage quand ils se présentent sous forme de gros morceaux, afin d'obtenir une matière première végétale ayant une granulométrie telle que $d_{95} < 5$ mm avant l'opération de broyage-micronisation finale. C'est en général le cas pour les chutes d'usinage, les taquets, les copeaux de rabotage, les petites branches, les souches, les écorces, les rafles de maïs. Le traitement initial de déchiquetage-broyage n'est pas nécessaire quand les déchets végétaux sont des déchets de sciures. Quand la matière végétale est humide (en général le taux d'humidité moyen est de l'ordre de 30 %), il est nécessaire de la sécher afin que le taux d'humidité résiduelle soit inférieur ou égal a 15 % avant l'opération de broyage-micronisation pour produire des charges végétales a la granulométrie et a la densité requises pour les applications selon l'invention.

Ces charges végétales auront un $d_{95}$ inférieur a 150 micromètres, et notamment un $d_{95} < 100$ micromètres, c'est-a-dire que au moins 95 % des particules de bois traverseront un tamis de mailles carrées de 150 micromètres sur 150 micromètres ; et respectivement, un tamis de mailles carrées de 100 x 100 micromètres. Ces charges végétales peuvent provenir soit d'une unité de broyage-micronisation dans le site de production du papier ou carton soit provenir d'une unité externe.

Les charges végétales sont aisément véhiculées par des moyens mécaniques par bandes ou vis transporteuses ou par moyens pneumatiques jusqu'a l'unité de stockage avant leur utilisation dans le site de leur production par une usine intégrée ou leur fourniture en sac, en vrac ou semi-vrac à des clients externes.

## Stade 3

Les charges végétales à la granulométrie souhaitée peuvent être directement introduites dans la masse comme une charge classique de la papèterie. La quantité de charges végétales peut varier de 1 à 50 parties en poids et notamment de 1 à 30 parties en poids pour 100 parties en poids de fibres pour des papiers ou cartons classiques emballage, impression écriture mais elle peut aussi varier de 60 à 600 parties en poids de charges végétales pour 100 parties en poids de fibres pour des applications spéciales, du type support d'enduction, d'imprégnation pour les matériaux de construction, les revêtements de murs et de sols.

Ces charges végétales peuvent être également introduites dans la masse avec mélange, homogénéisation et, le cas échéant, floculation préalables de la charge avec un liant organique.

Cette opération s'effectue en continu dans un floculateur étagé permettant de contrôler les conditions d'homogénéisation, de concentration et de dilution pour l'obtention du diamètre requis des flocs charges-liant avant leur incorporation dans les circuits de tête de la machine à papier ou à carton.

## Stade 4

Après mélange des fibres et des charges végétales, il est alors possible d'introduire dans la masse les autres additifs classiques et les adjuvants requis en fonction des objectifs souhaités.

La feuille de papier ou de carton peut avoir un grammage variable entre 20 et 500 g/m² mais pour des applications spéciales ce grammage peut-être beaucoup plus important, par exemple 600 à 1000 g/m² pour certains cellodermes et revêtements.

Cette technologie peut avantageusement être exploitée pour la fabrication de papiers et cartons et notamment les papiers d'emballage, les papiers pour ondulé, les papiers et carton à usages graphiques, les krafts d'emballage, le carton compact, le carton pour l'emballage des liquides, les krafts de couverture de caisse, le papier journal, les supports d'impression-écriture, les supports pour l'imprégnation de résines, les papiers et cartons à usages industriels et spéciaux, les papiers à usages domestiques, les supports pour enduction, les revêtements.

L'incorporation de la charge végétale micronisée selon le procédé de l'invention favorise l'égouttage sur la machine à papier ou à carton et favorise par suite la productivité, L'amélioration de l'égouttage est très importante pour les matériaux en feuilles de grammage élevé.

D'autres avantages et caractéristiques de l'invention seront mieux compris à la lecture qui va suivre d'exemples non limitatifs mais donnés à titre d'illustration pour l'utilisation de ces charges végétales notamment dans le domaine papetier.

## EXEMPLES 1-3

### Obtention de papier kraft

Pour appiécier les propriétés conférées par les charges végétales selon l'invention, on a préparé des formettes d'un grammage de 200 g/m² environ pour comparaison. L'exemple 1 concerne un papier de formulation classique suivant l'art antérieur et les exemples 2 et 3 des papiers obtenus selon l'invention. Les quantités des divers ingrédients (exprimées en parties en poids) et les modalités opératoires sont consignées dans le tableau I ci-après. Les résultats obtenus sont donnés dans le tableau II ci-après.

Le tableau II montre que l'utilisation de la charge végétale selon l'invention confère aux feuilles fibreuses de bonnes résistances mécaniques d'ensemble et plus particulièrement quand la charge végétale a été préfloculée avec un liant, Les produits des exemples 2 et 3 selon l'invention présentent une augmentation d'épaisseur de 16 % et une diminution de la densité de 12 à 15 % par rapport au produit de l'exemple 1 obtenu selon une formulation classique de l'art antérieur. On constate également une amélioration du collage pour les produits des exemples 2 et 3 par rapport au produit de l'exemple 1. Les feuilles des exemples 2 et 3 obtenues avec la charge végétale sont plus poreuses et s'égouttent plus facilement sur la toile de la formette.

## TABLEAU I

| Composition | Ex 1 * | Ex 2 ** | Ex 3 ** |
|---|---|---|---|
| Pâte kraft de résineux (a) (raffinage °SR) | 100 (23) | 83 (23) | 83 .(23) |
| Talc (b) | 25-30 (pour avoir 15 % à 18 % de char- ges restantes) | 0 | 0 |
| Charge végétale (c) | 0 | 17 (d) | 17 (e) |
| Agent de collage (f) | 0,3 | 0,3 | 0,3 |
| Alun | (g) | (g) | (g) |
| Amidon cationique | 0,2 | 0,2 | 0,2 |

**Notes**

\* formulation classique suivant l'art antérieur;
\*\* exemple suivant l'invention;
(a) origine : pin maritime;
(b) de granulométrie $d_{50}$ = 8-10 micromètres;
(c) de granulométrie $d_{95}$ < 70 micromètres et $d_{80}$ > 10 micromètres, densité < 300 kg/m³, origine : pin maritime;
(d) incorporation dans la masse ;
(e) incorporation dans la masse après mélange préalable d'amidon natif (0,3 partie) et floculation avec polyéthylèneimine (0,4 partie);
(f) émulsion de colophane;
(g) en quantité suffisante pour pH 4,5-4,7

**TABLEAU II**

| Propriétés | Ex 1 * | Ex 2 ** | Ex 3 ** |
|---|---|---|---|
| grammage (g/m²) | 200 | 201 | 198 |
| épaisseur (a) | 269 | 313 | 312 |
| densité (kg/m³) | 743 | 642 | 634 |
| Perméabilité à l'air Bendtsen (ml/mn) | 168 | 340 | 354 |
| Résistance à la traction, moyenne SM/ST (kN/m) | 11 | 10,6 | 11,1 |
| Allongement (%), moyenne SM/ST | 3,2 | 2,8 | 3,2 |
| Energie à la rupture (J/m²) | 133 | 121 | 130 |
| Résistance à l'éclatement (kPa) | 798 | 772 | 885 |
| Collage (Cobb) à 60 s (g/m²) | 33 | 21 | 20,5 |
| Charges restantes (%) | 16,5 | 0 | 0 |

Notes :

\* formulation classique suivant l'art antérieur;
\*\* exemple suivant l'invention;
(a) en micromètres.

## EXEMPLES 4-5

Obtention de papier kraft pour pochettes postales

Pour comparaison on a préparé deux échantillons de papiers kraft d'un grammage de 120 g/m² destinés à la fabrication de pochettes postales, suivant les quantités (exprimées en parties en poids) et modalités opératoires données dans le tableau III ci-après, le produit de l'exemple 4 étant un papier d'une formulation classique suivant l'art antérieur, et le produit de l'exemple 5 étant un papier contenant une charge végétale selon l'invention enrobée d'amidon natif. Les résultats obtenus, qui sont consignés dans le tableau IV ci-après montrent que l'incorporation de la charge végétale selon l'invention est très favorable à l'épaisseur (gain de 8 % pour l'exemple 5 par rapport au témoin de l'exemple 4).

**TABLEAU III**

| Composition | Ex 4 * | Ex 5 ** |
|---|---|---|
| **Mélange de base (a)** | | |
| 1) Pâte kraft de résineux éclaircie | 65 | 67 |
| 2) Vieux papiers kraft écru | 20 | 20 |
| 3) Pâte chimique mi-blanchie | 15 | 0 |
| 4) Charge végétale (à base de pin maritime (b) | 0 | 13 |
| **Additifs (c)** | | |
| − Amidon natif (d) | 0 | 0,8 |
| − Floculant cationique (e) | 0 | 0,03 |
| − Talc | 23 | 20 |
| − Agent de collage (f) | 0,6 | 0,6 |
| − Amidon cationique | 0,25 | 0,25 |
| − Colorant de nuançage | 0,05 | 0,05 |
| − Alun | (g) | (g) |

**Notes**

   \* formulation classique suivant l'art antérieur;
\*\* exemple suivant l'invention;
(a): quantités introduites exprimées en parties en poids;
(b): granulométrie : $d_{95} < 150$ micromètres, $d_{80} > 10$ micromètres, humidité < 15 % avant introduction dans la suspension aqueuse de fibres du mélange de base; densité < 300 $kg/m^3$;
(c): additifs introduits dans la masse [quantités exprimées en parties en poids pour 100 parties de mélange de base (1+2+3 + 4 = 100)];
(d): pour enrober la charge végétale;
(e): polyéthylèneimine;
(f): émulsion de colophane;
(g): en quantité suffisante pour pH 4,5-5,0.

**TABLEAU IV**

| Propriétés | Ex 4 * | Ex 5 ** |
|---|---|---|
| Grammage (g/m$^2$) | 87 | 87 |
| Epaisseur (a) | 151 | 163 |
| Main (cm$^3$/g) | 1,74 | 1,87 |
| Porosité Bendtsen (ml/mn) | 2 000 | 2 300 |
| Longueur de rupture (m) | 4 580 | 4 620 |
| Indice d'éclatement (kPa.m$^2$/g) | 3,22 | 3,48 |
| Indice de déchirure (mN.m$^2$/g) | 1 280 | 1 210 |
| Collage Cobb 60s (g/m$^2$) | | |
|   - recto | 18,9 | 17,8 |
|   - verso | 21,7 | 20,3 |
| Blancheur (photovolt) | 36 | 36 |
| Rétention (%) | | |
|   - fibres | 98 | 98 |
|   - charge végétale | – | 80 |
|   - talc | 59 | 65 |

Notes :

* formulation classique suivant l'art antérieur;
** exemple suivant l'invention;
(a) en micromètres.

-OBJECTIF

L'une des propriétés essentielles du papier kraft pour pochettes postales, en dehors des résistances mécaniques usuelles et de l'aspect d'un kraft frictionné pour ce type d'usage (déchirure, éclatement, traction, régularité et niveau de brillance) est le bouffant qui joue un rôle sur la machinabilité du papier transformé sur du matériel moderne de production d'enveloppes-pochettes mais aussi sur l'impact marketing.

- RESULTATS

L'introduction de matière végétale enrobée d'amidon natif est favorable à l'épaisseur de la feuille : gain d'environ 8 % sans modification des caractéristiques mécaniques du papier. Il convient de noter la bonne rétention de la charge végétale selon l'invention.

Il convient également de noter les bonnes performances de collage ainsi que l'augmentation sensible de l'épaisseur (l'épaisseur est l'inverse de la main) qui a un effet très favorable sur la rigidité qui varie proportionnellement avec le cube de l'épaisseur.

- AVANTAGES ECONOMIQUES

La réduction du coût de revient du produit selon l'exemple 5 par rapport au témoin de l'exemple 4 est de l'ordre de 6 %, sans tenir compte du grain de productivité dû à un meilleur égouttage.

**EXEMPLES 6-8**

Obtention de papier pour enduction plastique

On a préparé des feuilles de papier d'un grammage de 210 $g/m^2$ environ suivant les quantités d'ingrédients (exprimées en parties en poids) et les modalités opératoires du tableau V ci-après. Les résultats obtenus ont été consignés dans le tableau VI ci-après.

Ces résultats montrent que dans le cas d'espèces les produits des exemples 7 et 8 qui comportent une charge végétale selon l'invention ont une densité plus faible de 30 à 40 % par rapport au produit de l'exemple 6 obtenu selon une formulation de l'art antérieur.

Les compositions des exemples 7 et 8 sont très économiques (déchets de scierie et souches) avec moins de liant synthétique, ce qui explique les résistances mécaniques légèrement plus faibles, mais ces caractéristiques physiques sont largement au-dessus des exigences classiques pour des supports de base pour l'enduction de matières plastiques prévus pour la fabrication de matériaux destinés au bâtiment.

On constate également une bonne tenue thermique des feuilles avec charges végétales selon les exemples 7 et 8. L'augmentation sensible de l'épaisseur et la diminution de la densité jouent sur l'atténuation acoustique apportée par le matériau ou revêtement.

**TABLEAU V**

| Composition | Ex 6 * | Ex 7 ** | Ex 8 ** |
|---|---|---|---|
| Pâte kraft écrue de résineux (a) | 100 | 50 | 50 |
| (raffinage °SR) | (20-22) | (20-22) | (20-22) |
| Fibres de verre | 6 | 6 | 6 |
| Talc (b) | 45 à 55 (pour charges restantes 30-35 %) | 0 | 0 |
| Charge végétale (c) | 0 | 50 (d) | 50 (e) |
| Liant acrylique | 10 | 8 | 8 |
| Liant amylacé | 0 | 1 | 1 |
| Polyamide cationique | 0 | 1 | 1 |
| Amidon cationique | 0 | 0,2 | 0,2 |
| Agent de collage (f) | 1,2 | 1,2 | 1,2 |
| Alun | (g) | (g) | (g) |

.../....

13

## TABLEAU V (fin)

**Notes**

* \*    formulation classique suivant l'art antérieur;
* \*\*   exemple suivant l'invention;
* (a) origine : pin maritime;
* (b) de granulométrie $d_{50}$ = 8-10 micromètres;
* (c) de granulométrie $d_{95}$ < 100 micromètres et, $d_{80}$ > 10 micromètres, humidité avant introduction dans la suspension aqueuse de fibres < 15 % (pour un mélange de déchets de scierie et de souche de pin maritime dans le rapport pondéral 80-20); densité < 300 kg/m$^3$;
* (d) incorporation dans la masse ;
* (e) incorporation dans la masse après mélange préalable d'amidon natif (0,3 partie) et floculation avec polyéthylèneimine
* (f) émulsion de colophane;
* (g) en quantité suffisante pour pH 6,0-6,5.

EP 0 344 265 B1

**TABLEAU VI**

| Propriétés | Ex 6 * | Ex 7 ** | Ex 8 ** |
|---|---|---|---|
| Grammage (g/m²) | 215 | 208 | 207 |
| Epaisseur (a) | 270 | 398 | 395 |
| Densité (kg/m³) | 796 | 522 | 524 |
| Perméabilité à l'air Bendtsen (ml/mn) | 320 | 1 550 | 1 520 |
| Résistance à la traction, moyenne SM/ST (kN/m) | 7,95 | 6,22 | 6,98 |
| Energie à la rupture (J/m²) | 99 | 78 | 87 |
| Résistance à l'éclatement (kPa) | 570 | 539 | 565 |
| Collage (Cobb) à 60 s (g/m²) | 20 | 18,5 | 18,5 |
| Charges restantes (%) | 32 | 0 | 0 |
| Stabilité dimensionnelle<br>– étuvage (105°C, 1 h)<br>– trempage eau (1 h) | 0,7 % (b)<br>0,6 | 0 %<br>0,6 | 0 %<br>0,6 |

Notes :
* formulation classique suivant l'art antérieur;
** exemple suivant l'invention;
(a) en micromètres;
(b) retrait.

## EXEMPLES 9-10

Obtention de carton kraft bouffant

Les exemples 9 et 10 qui suivent illustrent les avantages de charge végétale micronisée suivant l'invention (cf exemple 10 par rapport au témoin de l'exemple 9) utilisée dans une composition fibreuse de pâte kraft écrue et de pâte chimico-mécanique, en vue de la fabrication de cartons multijets (notamment des cartons dits à intérieur bois et intérieur gris).

On constate que le remplacement d'environ 10 % de pâte chimico-mécanique (en abrégé : pâte "CTMP") par de la charge végétale micronisée enrobée d'amidon natif n'affecte pas les performances mécaniques du produit final en feuille, en particulier la rigidité, pour une main équivalente ou légèrement supérieure. Le matériau obtenu conformément à l'exemple 10 selon l'invention, présente une porosité supérieure à celle du témoin de l'exemple 9 et s'égoutte mieux. L'amélioration de l'égouttage constitue un avantage important pour la productivité, globalement la composition de l'exemple 10 est plus économique de 5 % par rapport à celle du témoin de l'exemple 9.

Les modalités d'obtention des cartons des exemples 9 et 10 figurent dans le tableau VII ci-après; et les propriétés de ces cartons sont consignées dans le tableau VIII ci-après.

15

**TABLEAU VII**

| Composition | Ex 9 * | Ex 10 ** |
|---|---|---|
| Mélange de base (a) | | |
| 1) Pâte kraft de résineux écrue raffinée à 20°SR | 50 | 50 |
| 2) Pâte CTMP | 50 | 39 |
| 3) Charge végétale (à base de pin maritime) (b) | 0 | 11 |
| Additifs (c) | | |
| - Amidon natif (d) | 0 | 0,7 |
| - Floculant cationique (e) | 0 | 0,02 |
| - Talc | 35 | 35 |
| - Agent de collage (f) | 0,6 | 0,6 |
| - Alun | (g) | (g) |

Notes
* formulation classique suivant l'art antérieur;
** exemple suivant l'invention;
(a): quantités introduites exprimées en parties en poids;
(b): granulométrie : $d_{95} < 100$ micromètres, $d_{80} > 10$ micromètres, humidité $< 15$ % avant introduction dans la suspension aqueuse de fibres du mélange de base; densité $< 300$ kg/m$^3$; la charge végétale est un mélange obtenu à partir de sciures et de copeaux de rabotage de pin maritime;
(c): additifs introduits dans la masse [quantités exprimées en parties en poids pour 100 parties de mélange de base (1+2+3 = 100)];
(d): pour enrober la charge végétale;
(e): polyéthylèneimine;
(f): émulsion de colophane;
(g): en quantité suffisante pour pH 4,5-5,0.

**TABLEAU VIII**

| Propriétés | Ex 9 * | Ex 10 ** |
|---|---|---|
| Grammage (g/m²) | 252 | 254 |
| Epaisseur (a) | 455 | 472 |
| Main (cm³/g) | 1,80 | 1,86 |
| Porosité Bendtsen (ml/mn) | 680 | 1 075 |
| Longueur de rupture (m) | 3 120 | 3 090 |
| Indice d'éclatement (kPa.m²/g) | 1,92 | 1,89 |
| Indice de déchirure (mN.m²/g) | 1 080 | 1 075 |
| Collage Cobb 60s (g/m²) | | |
| − recto | 20,2 | 19,6 |
| − verso | 20,4 | 18,6 |
| Blancheur (photovolt) | 44 | 46 |
| Rigidité Buchel (mN) | 145 | 165 |
| Rétention (%) | | |
| − fibres | 97,5 | 98,0 |
| − charge végétale | − | 88,0 |
| − talc | 65,0 | 70,0 |

Notes :

\* formulation classique suivant l'art antérieur;

\*\* exemple suivant l'invention;

(a) en micromètres.

## EXEMPLES 11-12

Obtention de support pour imprégnation

On a prépapé des supports pour imprégnation de résine phénolique destinés à la fabrication de panneaux stratifiés, le produit de l'exemple 11 étant obtenu selon une formulation classique de l'art antérieur, et le produit de l'exemple 12 étant obtenu avec une charge végétale selon l'invention. Les quantités des ingrédients (exprimées en parties en poids) et les modalités opératoires ont été consignées dans le tableau IX ci-après, Les résultats des essais sont donnés dans le tableau X ci-après.

Le tableau X montre que le produit de l'exemple 12 selon l'invention a une augmentation d'épaisseur de 30 % et une diminution de densité de 21 % par rapport au produit de l'exemple 11, Cette situation est particulièrement avantageuse pour permettre une diminution du nombre de feuilles constituant les noyaux internes de panneaux stratifiés.

## TABLEAU IX

| Composition | Ex 11* | Ex 12** |
|---|---|---|
| Pâte kraft de résineux (pin maritime) | 40 | 40 |
| Pâte kraft d'eucalyptus | 60 | 20 |
| Raffinage (°SR) | 22 | 22 |
| Charges végétales $d_{98} < 70$ micromètres | 0 | 40 |
| Anti-mousse | 0,1 | 0,1 |

Notes

   \*   formulation classique suivant l'art antérieur;
\*\*   exemple suivant l'invention.

EP 0 344 265 B1

**TABLEAU X**

| Propriétés | Ex 11* | Ex 12** |
|---|---|---|
| Grammage (g/m$^2$) | 180 | 182 |
| Epaisseur (micromètres) | 295 | 382 |
| Main (cm$^3$/g) | 1,64 | 2,1 |
| Densité (kg/m$^3$) | 610 | 476 |
| Porosité (s) | 14-18 | 10-12 |
| Ascension capillaire en 10 minutes (mm) | 40 à 50 | 40 à 50 |
| Résistance à la traction à sec, moyenne SM/ST (kN/m) | 6,1 | 5,8 |
| Résistance à la traction à l'état humide (SM) | 0,6 | 0,5 |

Notes

\* formulation classique suivant l'art antérieur;
\*\* exemple suivant l'invention.

**EXEMPLE 13**

Avec une composition comprenant 100 parties en poids sec de hot-melt Mobil EF 78 BE et 20 parties en poids sec de charge végétale (granulométrie $d_{95}$ < 50 micromètres, $d_{80}$ < 10 micromètres, humidité avant introduction dans la suspension aqueuse de fibre inférieure à 15 %), ladite charge végétale étant introduite après fusion du hot-melt, on réalise une enduction sur un support de base destiné à un complexe industriel. Le produit obtenu présente une opacité améliorée.

**EXEMPLES 14-15**

Obtention de support d'imprégnation pour panneaux stratifiés

Les exemples 14 (préparé selon une technique classique de l'art antérieur) et 15 (préparé selon le procédé de l'invention avec une charge végétale micronisée) ont été réalisés pour l'obtention d'un support kraft destiné à être imprégné ultérieurement avec une résine phénolique pour la préparation de panneaux stratifiés.

Les propriétés fondamentales désirées pour un tel support sont : la formation uniforme du matériau fibreux en feuille, la porosité et l'ascension capillaire pour une reprise de résine la plus uniforme possible au niveau souhaité eu égard aux propriétés requises pour les panneaux stratifiés.

La composition des ingrédients et les modalités d'obtention des feuilles des exemples 14 (témoin) et 15

19

(selon l'invention) sont consignées dans le tableau XI ci-après. Les propriétés des feuilles correspondantes, qui ont été obtenues, figurent dans le tableau XII ci-après.

Les valeurs numériques données dans les tableaux XI et XII montrent de façon claire les avantages conférés par l'utilisation de la charge végétale micronisée selon l'invention, à savoir :

- l'amélioration nette de la main (+ 18 % en comparant le produit de l'exemple 15 avec le témoin de l'exemple 14);

- le remplacement des fibres absorbantes (fibres junkers) qui sont onéreuses, par des fibres de résineux classiques, d'une part, et par la charge végétale, d'autre part, qui sont moins chères qui lesdites fibres absorbantes ;

- la possibilité d'utiliser des fibres moins raffinées (raffinage à 30°SR pour les fibres de l'exemple 15, au lieu de 26°SR pour les fibres de l'exemple 14).

Ces avantages confèrent pour le produit de l'exemple 15 par rapport à la feuille témoin de l'exemple 14 un gain de productivité appréciable au niveau (i) de la production sur machine à papier du support pour imprégnation (eu égard au meilleur égouttage ), et (ii ) du dispositif d'imprégnation lors de l'apport de la résine phénolique.

En bref, conformément à l'invention, on constate que le coût de préparation de la feuille 15 est au moins inférieur de 15 % à celui de la feuille 14.

## TABLEAU XI

| Composition | Ex 14 * | Ex 15 ** |
|---|---|---|
| **Mélange de base (a)** | | |
| 1) Pâte kraft de résineux écrue | 65 | 80 |
| 2) Pâte de feuille junkers (qualité absorbante) | 35 | 0 |
| Raffinage (°SR) pour (1 + 2) | 26°SR | 30°SR |
| 3) Charge végétale (à base de pin maritime) (b) | 0 | 20 |
| **Additifs (c)** | | |
| – Amidon natif (d) | 0 | 1 |
| – Floculant cationique (e) | 0 | 0,03 |

**Notes**

* formulation classique suivant l'art antérieur;
** exemple suivant l'invention;
(a): quantités introduites exprimées en parties en poids;
(b): de granulométrie : $d_{95} < 100$ micromètres, $d_{80} > 10$ micromètres, et humidité inférieure à 15 % avant introduction dans la suspension aqueuse des fibres;
(c): additifs introduits dans la masse [quantités exprimées en parties en poids pour 100 parties de mélange de base (1+2+3 = 100)];
(d): pour enrober la charge végétale;
(e): polyéthylèneimine.

**TABLEAU XII**

| Propriétés | Ex 14 * | Ex 15 ** |
|---|---|---|
| Grammage (g/m$^2$) | 181 | 180 |
| Epaisseur (a) | 285 | 335 |
| Main (cm$^3$/g) | 1,57 | 1,86 |
| Porosité Bendtsen (ml/mn) | 590 | 850 |
| Longueur de rupture (m) | 4 980 | 4 890 |
| Indice d'éclatement (kPa.m$^2$/g) | 3,78 | 3,60 |
| Indice de déchirure (mN.m$^2$/g) | 1 470 | 1 480 |
| Ascension capillaire 5 mm (en minutes) | 25,2 | 38 |
| Goutte d'eau (s)<br>– recto<br>– verso | 5,0<br>4,5 | 2,0<br>2,5 |
| Rétention (%)<br>– charge végétale | – | 79 |

Notes :

\* formulation classique suivant l'art antérieur ;
\*\* exemple suivant l'invention ;
(a) en micromètres.

## EXEMPLES 16-17

Obtention de Kraft liner

Les exemples 16 (préparé selon une technique classique de l'art antérieur) et 17 (préparé selon le procédé de l'invention avec une charge végétale micronisée) ont été réalisés pour l'obtention d'une feuille de kraft liner. Le but recherché était d'augmenter la main tout en conservant les propriétés physiques de la feuille témoin de l'exemple 16.

La composition des ingrédients et les modalités d'obtention des feuilles des exemples 16 (témoin) et 17 (selon l'invention) sont consignées dans le tableau XIII ci-après. Les propriétés des feuilles correspondantes, qui ont été obtenues, figurent dans le tableau XIV ci-après.

Les valeurs numériques données dans les tableaux XIII et XIV montrent que la feuille de l'exemple 17 présente une amélioration de la main de 12 % avec une diminution de la résistance à l'éclatement de 5 % . On peut pallier cette diminution de la résistance (compte tenu de la marge importante de la porosité du produit fibreux en feuille de l'exemple 17) par une petite augmentation du °SR des fibres.

**TABLEAU XIII**

| Composition | Ex 16 * | Ex 17 ** |
|---|---|---|
| **Mélange de base (a)** | | |
| 1) Pâte kraft de résineux écrue raffinée à 20°SR | 75 | 60 |
| 2) Pâte de vieux papier (OCC) | 25 | 25 |
| 3) Charge végétale (à base de pin maritime) (b) | 0 | 10 |
| **Additifs (c)** | | |
| – Amidon | 0 | 1,1 |
| – Floculant cationique (e) | 0 | 0,02 |
| – Agent de collage (f) | 0,6 | 0,6 |
| – Alun | (g) | (g) |

**Notes**

* formulation classique suivant l'art antérieur;
** exemple suivant l'invention;
(a): quantités introduites exprimées en parties en poids;
(b): granulométrie : $d_{95} < 100$ micromètres, $d_{80} > 10$ micromètres, humidité $< 15$ % avant introduction dans la suspension aqueuse des fibres du mélange de base, densité = 195 kg/m$^3$;
(c): additifs introduits dans la masse [quantités exprimées en parties en poids pour 100 parties de mélange de base (1+2+3 + 4 = 100)]; densité 195 kg/m$^3$ $d_{95} < 100$ micromètres;
(e): polyéthylèneimine;
(f): émulsion de colophane;
(g): en quantité suffisante pour pH 4,5-5,0.

**TABLEAU XIV**

| Propriétés | Ex 16 * | Ex 17 ** |
|---|---|---|
| Grammage (g/m²) | 152 | 151 |
| Epaisseur (a) | 238 | 266 |
| Main (cm³/g) | 1,56 | 1,76 |
| Porosité Bendtsen (ml/mn) | 500 | 1 000 |
| Longueur de rupture (m) | 4 670 | 4 595 |
| Indice d'éclatement (kPa.m²/g) | 3,82 | 3,65 |
| Indice de déchirure (mN.m²/g) | 1 570 | 1 480 |
| Collage Cobb 60s (g/m²) | | |
| – recto | 20,2 | 20,2 |
| – verso | 24,8 | 21,8 |
| Rétention (%) | | |
| – fibres | – | 97,6 |
| – charge végétale | – | 85,0 |

Notes :

\* formulation classique suivant l'art antérieur;

\*\* exemple suivant l'invention;

(a) en micromètres.

## Revendications

1. Procédé de préparation par voie papetière d'un matériau fibreux en feuille, ledit procédé, qui comprend l'introduction d'une charge végétale pulvérulente dans une dispersion aqueuse contenant des fibres, étant caractérisé en ce que ladite charge végétale a une granulométrie telle que (i) au moins 95 % en poids des particules de ladite charge végétale ont des dimensions inférieures à 150 micromètres, et (ii) au moins 80 % en poids des particules de ladite charge végétale ont des dimensions supérieures à 10 micromètres, en ce que ladite charge végétale est obtenue par une opération de broyage-micronisation à partir d'une source végétale ayant une humidité résiduelle inférieure à 20 % et en ce que la charge provient d'une essence telle que la répartition granulométrique et les conditions de broyage-micronisation conduisent à une densité de la charge inférieure à 500 Kg/m³, de préférence inférieure à 300 Kg/m³, ledit procédé permettant d'obtenir, notamment, une diminution de la densité, une augmentation de l'épaisseur et une amélioration de l'égouttage tion de la densité, une augmentation de l'épaisseur et une amélioration de l'égouttage du matériau fibreux en feuille.

2. Procédé suivant la revendication 1, caractérisé en ce que ladite charge végétale est obtenue par une opération de broyage-micronisation à partir de déchets végétaux ayant une granulométrie moyenne inférieure à 5 mm.

3. Procédé suivant la revendication 2, caractérisé en ce que ladite charge végétale provient de déchets végétaux ayant une humidité résiduelle inférieure à 15 % .

4. Procédé suivant la revendication 1, caractérisé en ce que ladite charge végétale a une granulométrie telle que au moins 95 % des particules de ladite charge végétale ont des dimensions inférieures à 100 micromètres.

5. Matériau fibreux en feuille contenant une charge végétale dans sa masse et obtenu par voie papetière à partir d'une suspension aqueuse contenant des fibres et une charge végétale, caractérisé en ce qu'il est obtenu selon le procédé de l'une quelconque des revendications 1 à 4 et en ce qu'il comporte un rapport pondéral charge végétale/fibres dans la gamme de 1/100 à 6/1.


**Patentansprüche**

1. Verfahren zur Herstellung eines ein faserhaltiges Material enthaltenden Blattes auf papiertechnischem Weg, umfassend das Einbringen eines pulverförmigen pflanzlichen Füllstoffes in eine wässerige, die Fasern enthaltende Dispersion, **dadurch gekennzeichnet,** daß der pflanzliche Füllstoff eine solche Kornverteilung hat, daß (i) mindestens 95 Gewichtsprozent der Teilchen des pflanzlichen Füllstoffs eine Größenordnung unterhalb von 150 µm haben und (ii) mindestens 80 Gewichtsprozent der Teilchen des pflanzlichen Füllstoffs eine Größenordnung oberhalb von 10 µm aufweisen, daß der pflanzliche Füllstoff erhalten worden ist durch eine Mikrozerkleinerung von einem pflanzlichen Zufluß mit einer zurückbleibenden Feuchtigkeit von unter 20 % und daß der Füllstoff von solcher Herkunft ist, daß die granulometrische Aufteilung und die Bedingungen der Mikrozerkleinerung zu einer Dichte des Füllstoffes unterhalb von 50 kg/m³, vorzugsweise unterhalb von 300 kg/m³ führen, wobei auf diese Weise eine Herabsetzung der Dichte, eine Erhöhung der Stärke und eine Verbesserung der Entwässerung des faserhaltigen Materials in Blattform erhalten wird.

2. Verfahren gemäß Anspruch 1, **dadurch gekennzeichnet,** daß der pflanzliche Füllstoff erhalten worden ist durch eine Mikrozerkleinerung von pflanzlichen Abfallprodukten mit einer mittleren Kornverteilung unter 5 mm.

3. Verfahren gemäß Anspruch 2, **dadurch gekennzeichnet,** daß der pflanzliche Füllstoff aus einem pflanzlichen Abfallprodukt mit einer zurückbleibenden Feuchtigkeit unterhalb von 15 % stammt.

4. Verfahren gemäß Anspruch 1, **dadurch gekennzeichnet,** daß der pflanzliche Füllstoff eine solche Kornverteilung aufweist, daß mindestens 95 % der pflanzlichen Füllstoff -Teilchen eine Größenordnung unterhalb von 100 µm haben.

5. Faserhaltiges Material in Blattform, enthaltend einen pflanzlichen Füllstoff und erhältlich auf papiertechnischem Wege aus einer wässrigen Suspension mit einem Gehalt an den Fasern und dem pflanzlichen Füllstoff, **dadurch gekennzeichnet,** daß gemäß einem der in den Ansprüche I bis 4 angeführten Verfahren hergestellt wurde und daß das Gewichtsverhältnis von pflanzlichem Füllstoff zu Fasern im Bereich von 1/100 bis 6/1 liegt.


**Claims**

1. A method for the preparation of a fibrous sheet material by a papermaking technique, said method, which comprises introducing a pulverulent vegetable filler into an aqueous dispersion containing fibers, being characterized in that said vegetable filler has a particle size such that (i) at least 95 % by weight of the particles of said vegetable filler have dimensions smaller than 150 micrometers, and (ii) at least 80 % by weight of the particles of said vegetable filler have dimensions larger than 10 micrometers, in that said vegetable filler is obtained by means of a grinding-micronization operation from vegetable waste having a residual moisture content of less than 20 %, and in that said vegetable filler is originated from a plant variety such that the granulometric distribution and the grinding-micronization conditions lead to a filler density lower than 500 kg/m³ and preferably lower than 300 kg/m³, said method allowing to reduce the density, to increase the thickness and to improve drainage of the fibrous sheet material.

2. A method according to claim 1, characterized in that said vegetable filler is obtained by means of a grinding-micronization operation from vegetable waste having a mean particle size of less than 5 mm.

3. A method according to claim 2, characterized in that said vegetable filler originates from vegetable waste having a residual moisture content of less than 15 % .

4. A method according to claim 1, characterized in that said vegetable filler has a particle size such that at least 95 % of the particles of said vegetable filler have dimensions smaller than 100 micrometers.

5. A fibrous sheet material containing a vegetable filler in its mass and obtained by a paper making technique from an aqueous suspension containing fibers and a vegetable filler, characterized in that it is obtained according to the method as claimed in any one of claims 1-4, and in that it comprises a weight ratio vegetable filler/fibers within the range from 1/100 to 6/1.